**Europäisches Patentamt**

**European Patent Office**

**Office européen des brevets**

(19)

(11) Numéro de publication: **0 036 973**
**B1**

(12) **FASCICULE DE BREVET EUROPEEN**

(45) Date de publication du fascicule du brevet: **19.10.83**

(51) Int. Cl.³: **A 23 J 3/00, D 01 F 4/00**

(21) Numéro de dépôt: **81101718.5**

(22) Date de dépôt: **09.03.81**

(54) **Procédé de filage de protéines de poisson et fils obtenus.**

(30) Priorité: **31.03.80 CH 2521/80**

(43) Date de publication de la demande:
**07.10.81 Bulletin 81/40**

(45) Mention de la délivrance du brevet:
**19.10.83 Bulletin 83/42**

(84) Etats contractants désignés:
**DE FR GB IT SE**

(56) Documents cités:
**FR - A - 2 126 514**
**GB - A - 1 470 047**
**NL - A - 6 914 370**

(73) Titulaire: **SOCIETE DES PRODUITS NESTLE S.A.**
**Case postale 353**
**CH-1800 Vevey (CH)**

(72) Inventeur: **Askman, Lars**
**1016 Clovernoll Court**
**Marysville Ohio 43040 (US)**
Inventeur: **Isely, Alain**
**Avenue de Chailly 20**
**CH-1012 Lausanne (CH)**
Inventeur: **Wetzel, Pierre**
**Rue du Lac 27**
**CH-1800 Vevey (CH)**

Courier Press, Leamington Spa, England.

Procédé de filage de protéines de poisson et fils obtenus

La présente invention concerne un procédé de filage de protéines de poisson.

On connaît de nombreux procédés, dits "de filage", qui ont tous en commun une première étape consistant à préparer un milieu aqueux alcalin contenant des protéines, et une seconde étape consistant à injecter ce milieu aqueux alcalin à travers une filière dans un milieu aqueux acide. Les protéines coagulent alors sous forme de fils.

Ces procédés ont été appliqués avec quelques succès sur le plan technologique aux protéines végétales, telles que les protéines du soja, à partir d'une matière végétale concentrée en protéines qu'on dénomme, selon son taux de concentration en protéines, "farine", "concentré" ou "isolat". C'est dire que la matière végétale considérée a dû subir des opérations préliminaires qui renchérissent considérablement le coût du produit filé et en diminuent la valeur nutritive. Par exemple, les procédés selon GB—A—1470047 et FR—A—2126514 partent d'isolats de protéines de soja ou de carthame, c'est-à-dire de matières premières végétales enrichies en protéines au préalable.

Ces procédés de filage ont été également appliqués à des protéines animales, telles que les protéines de poisson. Là aussi, il convient de partie d'une matière concentrée en protéines telle que la farine. Une telle farine peut être obtenue par exemple selon NL—A—6914370, par mise en solution par l'action d'une base des déchets de poisson broyés et homogénéisés, séparation de la phase huileuse, précipitation isoélectrique des protéines en milieu acide, centrifugation, lavage du précipité, extraction de celui-ci par un solvant organique polaire et élimination du solvant. Dans ces conditions, les produits finis sont relativement onéreux et ne peuvent prétendre à l'appellation "pur poisson" ou "poisson 100%". En outre, le filage n'est possible qu'en utilisant des adjuvants, tels que des acides gras ou des alginates.

La présente invention permet au contraire le filage de protéines de poisson à partir du poisson entier ou en morceaux et sans emploi d'adjuvants. Le poisson est donc directement utilisable tel qu'il est pêché ou tel qu'il sort des usines de filets ou de conserves. C'est une série de conditions opératoires spécifiques au niveau de la préparation du milieu alcalin à filer et du milieu acide de filage qui rendent ce résultat possible.

Dans ce procédé, on prépare un milieu aqueux alcalin contenant les protéines du poisson, puis, à travers une filière, on injecte ce milieu aqueux alcalin dans un milieu aqueux acide, les protéines coagulant sous forme de fils. Ce procédé est caractérisé en ce que le milieu alcalin contenant les protéines du poisson est préparé à partir de poisson entier ou en morceaux par la suite continue des opérations suivantes:

— broyage du poisson avec addition d'eau, le rapport pondéral eau/poisson étant compris entre 0,7 et 2,5,
— addition d'un alcali à raison d'un rapport alcali/poisson de 0,5 à 1,5 en poids de matières sèches,
— chauffage du mélange à une température comprise entre 60 et 100°C pendant un temps compris entre 1/2 et 3 minutes,
— refroidissement du milieu à une température comprise entre 35 et 60°C et passage de celui-ci dans un moulin colloïdal,
— centrifugation pour en éliminer les matières solides, puis désaération avec ou sans concentration de façon à ce que la teneur en matières sèches en soit comprise entre 6 et 10% en poids.

Ce procédé est également caractérisé en ce que le milieu aqueux alcalin, comme préparé ci-dessus, est injecté dans un milieu aqueux acide de pH compris entre 0,7 et 0,9 et de concentration saline comprise entre 7 et 15% en poids, ce pH et cette concentration saline restant sensiblement constants durant le filage, que les fils obtenus sont lavés, soumis à un traitement thermique permettant de fixer leur structure et neutralisés.

Si les conditions énoncées ci-dessus ne sont pas respectées, on constate que les protéines de poisson ont tendance à former des gels protéiques infilables à la concentration nécessaire pour le filage. Leur comportement est en cela bien différent de celui des protéines du soja.

Le poisson de départ peut se présenter sous la forme de poisson entier, surtout lorsqu'il s'agit de petits poissons, ou de poisson en morceaux et avantageusement de restes de poisson après la levée des filets, ou encore de miettes qui contiennent elles aussi les arêtes, la tête et la peau.

Pour la commodité de l'exposé, les diverses opérations successives du procédé selon l'invention seront présentées sous forme de chapitre repéré par un titre.

Broyage

Le poisson entier ou en morceaux est broyé, avantageusement à des dimensions de l'ordre de 1 à 8 mm, avec addition d'eau lors de la mouture. Le rapport de dilution eau/poisson, compris entre 0,7 et 2,5, est de préférence situé entre 1,0 et 1,5, ces rapports de dilution assurant la quantité optimale d'eau pour la suite des opérations. On obtient ainsi une dispersion.

Solubilisation

Pour cette opération, qui consiste à dissoudre les protéines en milieu alcalin, on ajoute à la dispersion, avantageusement à une température comprise entre 10 et 20°C, un alcali, tel que l'hydroxyde de sodium ou des mélanges hydroxydes de sodium et potassium, de préférence sous forme de solution, à raison d'un rapport alcali/poisson compris entre 0,5 et 1,5. De telles proportions permettent d'obtenir les pH désirés, compris entre 10 et 14, sans avoir un excès d'alcali. Après addition, le mélange est porté à une température comprise entre 60 et 100°C, avantageusement vers 95°C, pendant un temps relativement bref (1/2 à 3 minutes), typiquement de 1 minute, par tous moyens, par exemple dans un échangeur de chaleur à surface raclée ou mieux par injection de vapeur. Les protéines de poisson se retrouvent en solution.

Centrifugation

Cette opération a pour but de séparer les matières mal dissoutes ou non dissoutes, telles que les arêtes, la peau, les têtes et les viscères. Elle s'effectue de préférence après abaissement de la température entre 40 et 50°C. On obtient ainsi une solution de protéines exempte de matières non dissoutes.

Desaeration/concentration

Il s'agit maintenant de désaérer la solution obtenue avant filage de façon à en enlever les bulles d'air qui pourraient perturber la suite des opérations et à ajuster la viscosité de cette solution dans des limites convenables, de préférence comprises entre 10 et 30 Pa . s, mesurée entre 25 et 40°C. La solution a alors la teneur en matières sèches désirée, soit 6 à 10%, de préférence autour de 9%. S'il y a lieu, la solution est filtrée à nouveau, par exemple sur des filtres bougies.

Filage

Le milieu aqueux, qui a un pH compris entre 10 et 14 et avantageusement entre 10 et 13, est injecté, à travers des filières, dans un bain acide ayant un pH compris entre 0,7 et 0,9. Ce bain acide contient un acide alimentaire tel que l'acide acétique, l'acide phosphorique et, de préférence, l'acide chlorhydrique. Ce milieu contient également du sel, en forte concentration comprise entre 7 et 15% en poids. La force ionique du milieu acide est alors comprise entre 2 et 2,2. La présence de sel en forte proportion est déterminante, pour permettre une coagulation optimum par abaissement du pH du point isoélectrique des protéines de poisson de sa valeur naturelle 5 à une valeur comprise entre 3 et 3,5, et une certaine déshydratation des fibres obtenues, par pression osmotique. On obtient ainsi des fils de protéines de poisson ayant un pH compris entre 4 et 4,2, alors qu'un pH supérieure à 5 donnerait des fils cassants, tandis qu'un pH inférieur à 3,5 entraînerait des pertes importantes en protéines par redissolution lors du lavage ultérieur.

Le procédé selon l'invention peut être mis en oeuvre de façon particulièrement simple. Le réglage du pH du milieu acide, qui doit rester aussi stable que possible, est avantageusement asservi à la mesure du pH du liquide expulsé par les fils lorsque ceux-ci sont égouttés. La concentration en sel est repérée en continu par la mesure de la densité, laquelle n'est pas influencée par le pH. Un doseur vibrant règle automatiquement l'addition de sel.

Dans une variante avantageuse, surtout si la matière de départ comprend une majorité de têtes, ainsi que de la peau, le milieu aqueux alcalin est, avant filage, traité au charbon actif pour décoloration. Un tel traitement peut être également utile, lorsque le milieu alcalin sert plusieurs fois, c'est-à-dire lorsque les opérations sont continues et que ce milieu, au fur et à mesure de sa consommation, est maintenu constant en volume et composition par apport de poisson et d'alcali frais. Dans ce cas, ce milieu est passé selon nécessité sur charbon actif afin de lui maintenir une couleur acceptable.

Lavage/traitement thermique/neutralisation

Les fils obtenus subissent des traitements complémentaires destinés à leur conférer des propriétés gustatives et mécaniques correspondant à l'usage qu'on désire en faire. Ainsi, les fils sont abondamment lavés à l'eau de manière à abaisser leur teneur en sel entre 2 et 5% en poids de matières sèches. A l'issue de ce lavage, ils subissent un traitement thermique permettant une meilleure tenue à la neutralisation. Ce traitement est nécessaire pour stabiliser les fils en fixant leur structure afin de diminuer leur resolubilisation lors du traitement de neutralisation ultérieur. Une telle resolubilisation serait préjudiciable au rendement et à la tenue mécanique des fils. Pour ce faire, on les immerge en continu pendant 10 à 15 minutes dans un bac contenant de l'eau à 50—75°C. On les neutralise alors, à un pH compris entre 6 et 6,8, en les immergeant pendant un bref laps de temps (3 à 10 sec), dans une solution tampon, par exemple une solution de bicarbonate de sodium contenant de l'hydroxyde de sodium. On obtient le même résultat en immergeant les fils pendant un temps plus long, de 5 à 10 minutes, dans un tampon à base de phosphate monosodique. Enfin, on termine généralement par une opération d'essorage.

Les fils obtenus présentent de remarquables qualités mécaniques les rendant particulièrement aptes aux utilisations indiquées cidessous. Après coagulation et sans neutralisation, le fil ayant un pH de 4,2 est dur et élastique. Une fois neutralisé à un pH de 6, ce fil est plus tendre et présente une bonne capacité de réhydratation. On a mesuré par exemple, pour un faisceau de 5,000 fils, des charges à la rupture variant entre 700 et 1,700 g par échantillon, avec un allongement de 75 à 150%.

Fait plus remarquable encore, ces fils

présentant un P.E.R. (Protein Efficiency Ratio) voisin de 3,8. C'est dire que ces fils ont une valeur nutritive supérieure à celle de la caséine (P.E.R.=3,2), qui est pourtant considérée comme une référence en la matière.

La couleur de ces fils varie du blanc au gris, selon que les peaux et les têtes ont été utilisées ou non. Leur saveur est proche de celle du poisson initial.

On peut utiliser les dits fils tels quels, par exemple en les enroulant et en les trempant dans une solution acétique aromatique. On obtient ainsi un produit proche des "Roll mops". On peut également les utiliser comme renforçateur de texture, à raison de 20 à 40% de fibres par exemple dans des produits tels que ceux qui sont vendus sous le nom de "Sticks" de poisson. En outre, ces fils une fois coupés et correctement assaisonnés et cuits, constituent d'excellents succédanés de crustacés.

Les exemples suivants illustrent la mise en oeuvre du procédé selon l'invention. Dans ces exemples, les pourcentages sont exprimés en valeur pondérale.

Exemple 1

Dans un moulin équipé d'une grille à trous fins de 3 mm, on broie des miettes de poisson en diluant avec de l'eau à raison d'un rapport pondéral eau/poisson de 1,2. On ajoute alors de l'hydroxyde de sodium qui correspond à un rapport pondéral alcali/protéines de 0,1 environ sur matière sèche. L'hydroxyde de sodium est ajouté sous forme de solution à 10% en poids.

On porte alors ce mélange par injection de vapeur à une température de 95°C pendant une minute, puis il est ramené à 50°C et passé dans un moulin colloïdal.

On le passe alors dans une centrifugeuse de manière à éliminer les impuretés solides, puis on le concentre dans un évaporateur à surface raclée sous vide, de façon à obtenir un milieu pour filage ayant une concentration en matières sèches de l'ordre de 9%. Outre l'effet au niveau de la concentration, cette opération permet également la désaération du milieu pour éviter que des bulles d'air ne viennent sérieusement perturber le filage proprement dit. Ce milieu aqueux alcalin, ramené vers 30°C et ayant un pH égal à 12,7, est alors injecté à travers des buses dans un milieu aqueux d'acide chlorhydrique ayant un pH égal à 0,9 et comprenant du chlorure de sodium à raison de 12% en poids.

La buse utilisée est une filière de 2,500 trous de 140 nm de diamètre chacun. Dans ces conditions, la distance que les fils parcourent dans le milieu acide est de l'ordre de 10 à 13 cm.

Le pH et la salinité de ce milieu acide sont mesurés en continu, de façon à corriger immédiatement tout écart. La concentration en chlorure de sodium est mesurée par un contrôle continu de la densité selon la méthode du tube vibrant. La concentration en acide chlorhydrique est mesurée indirectement en contrôlant le pH du liquide expulsé des fils à la sortie du bain.

Les fils ainsi formés, une fois sortis du milieu acide de coagulation et grossièrement essorés, sont lavés sous un appareil du type "douche", puis ils sont immergés en continu pendant 10 à 15 minutes dans un bac contenant de l'eau à 60°C. On les plonge ensuite pendant 5 secondes dans une solution de bicarbonate de sodium et de soude dont la concentration en bicarbonate (0,1% en poids) et le pH (8,2) sont maintenus constants. Le pH des fils passe alors à 6,3. Ceux-ci, réunis en faisceaux, sont alors enroulés sur un tambour et subissent encore une exsudation naturelle qui porte leur teneur d'équilibre en matière sèche à 20% environ.

Ces fils ont une texture relativement tendre et une bonne capacité de réhydratation. Ils sont notablement plus tendres que les mêmes fils au pH de 4,2, c'est-à-dire avant la neutralisation dans un bain de bicarbonate de sodium. Cette relative tendreté est un facteur qui contribue à une sensation buccale agréable.

Le P.E.R. est excellent, puisqu'on mesure une valeur de 3,8, comparativement à la valeur de la caséine qui est de 3,2.

Exemple 2

On procède comme décrit à l'exemple 1, à partir de poisson en morceaux ou de petits poissons entiers. Dans ce cas, on veille à débarrasser soigneusement le milieu alcalin pour filage de ses impuretés solides et on complète donc la centrifugation par passage sur des bougies filtrantes.

La suite des opérations est analogue à ce qui est décrit dans cet exemple 1 et on obtient des fils ayant des caractéristiques semblables.

Exemple 3

On procède comme décrit à l'exemple 2 à partir de déchets de poisson riches en peau, arêtes et têtes. La centrifugation est également complétée par un passage sur bougies filtrantes et, avant filage, le milieu alcalin est encore traité par du charbon actif. La couleur grisâtre de ce milieu s'éclaircit notablement.

Par la suite des opérations décrites ci-dessus, on obtient des fils ayant des propriétés mécaniques et nutritionnelles semblables à celles des exemples précédents, leur couleur étant légèrement plus foncée. Le goût est agréable et rappelle celui de la morue.

**Revendications**

1. Procédé de filage de protéines de poisson dans lequel on prépare un milieu aqueux alcalin contenant les protéines de poisson, puis, à travers une filière, on injecte ce milieu aqueux alcalin dans un milieu aqueux acide, les protéines coagulant sous forme de fils, caractérisé par le fait que le milieu alcalin contenant les protéines du poisson est préparé à partir de poisson entier ou en morceaux par la suite continue des opérations suivantes:

— broyage du poisson avec addition d'eau, le rapport pondéral eau/poisson étant compris entre 0,7 et 2,5,
— addition d'un alcali à raison d'un rapport alcali/poisson de 0,5 à 1,5 en poids de matières sèches,
— chauffage du mélange à une température comprise entre 60 et 100°C pendant un temps compris entre 1/2 et 3 min,
— refroidissement du milieu à une température comprise entre 35 et 60°C et passage de celui-ci dans un moulin colloïdal,
— centrifugation pour en éliminer les matières solides, puis désaération avec ou . sans concentration de façon à ce que la teneur en matières sèches en soit comprise entre 6 et 10% en poids

et que ledit milieu aqueux alcalin est injecté dans un milieu aqueux acide de pH compris entre 0,7 et 0,9 et de concentration saline comprise entre 7 et 15% en poids, ce pH et cette concentration saline restant sensiblement constants durant le filage, que les fils sont lavés et soumis à un traitement thermique permettant de fixer leur structure et neutralisés.

2. Procédé selon la revendication 1, caractérisé par le fait que le rapport pondéral eau/poisson est compris entre 1,0 et 1,5.

3. Procédé selon la revendication 1, caractérisé par le fait que le chauffage du mélange à une température comprise entre 60 et 100°C est réalisé par injection de vapeur.

4. Procédé selon la revendication 1, caractérisé par le fait que le milieu aqueux alcalin avant injection dans le milieu acide a une viscosité comprise entre 10 et 30 Pa . s.

5. Procédé selon la revendication 1, caractérisé par le fait qu'avant injection dans le milieu acide, le milieu alcalin est passé sur bougies filtrantes.

6. Procédé selon la revendication 1, caractérisé par le fait qu'avant injection dans le milieu aqueux acide ou en étape de recyclage, le milieu aqueux alcalin est traité au charbon actif.

7. Procédé selon la revendication 1, caractérisé par le fait qu'après coagulation les fils sont lavés à l'eau de manière à abaisser leur teneur en sel entre 2 et 5% en poids de matières sèches.

8. Procédé selon la revendication 1, caractérisé par le fait que les fils sont immergés pendant 10 à 15 minutes dans de l'eau à 50—75°C.

9. Procédé selon la revendication 1, caractérisé par le fait qu'après coagulation, les fils de protéines de poisson sont neutralisés à un pH compris entre 6 et 6,8.

10. Fils de protéines de poisson obtenus par le procédé selon la revendication 1.

11. Fils selon la revendication 10, caractérisés par le fait que leur valeur P.E.R. est voisine de 3,8.

**Patentansprüche**

1. Verfahren zum Spinnen von Fischproteinen, bei welchem ein wäßriges alkalisches Medium, welches die Fischproteine enthält, hergestellt und hierauf dieses wäßrige alkalische Medium durch eine Spinndüse in ein wäßriges saures Medium eingesponnen wird, wobei die Proteine unter Bildung von Fäden koagulieren, dadurch gekennzeichnet, daß das alkalische Medium, welches die Fischproteine enthält, aus ganzem oder stückigem Fisch durch die nachstehenden aufeinanderfolgenden Arbeitsgänge hergestellt wird:

— Zerkleinern des Fischs unter Zugabe von Wasser, wobei ein Wasser/Fisch-Gewichtsverhältnis zwischen 0,7 und 2,5 eingehalten wird,
— Zugeben eines Alkalis in einem Alkali/Fisch-Verhältnis von 0,5 bis 1,5, bezogen auf das Gewicht der Trockenfeststoffe,
— Erhitzen des Gemischs auf eine Temperatur zwischen 60 und 100°C während einer Zeit zwischen 1/2 und 3 min,
— Abkühlen des Mediums auf eine Temperatur zwischen 35 und 60°C und Einführen desselben in eine Kolloidalmühle,
— Zentrifugieren zur Beseitigung von Feststoffen und anschließendes Entlüften mit oder ohne Konzentrierung in einer Weise, daß ein Trockenfeststoffgehalt zwischen 6 und 10 Gewichtsprozent erreicht wird

und daß das wäßrige alkalische Medium in ein wäßriges saures Medium mit einem pH zwischen 0,7 und 0,9 und mit einer Salzkonzentration zwischen 7 und 15 Gewichtsprozent eingesponnen wird, wobei dieser pH und diese Salzkonzentration während des Spinnens weitgehend konstant gehalten werden, und daß schließlich die Fäden gewaschen und einer thermischen Behandlung zur Fixierung ihrer Struktur unterworfen und neutralisiert werden.

2. Verfahren nach Anspruch 1, dadurch gekennzeichnet, daß ein Wasser/Fisch-Gewichtsverhältnis zwischen 1,0 und 1,5 eingehalten wird.

3. Verfahren nach Anspruch 1, dadurch gekennzeichnet, daß das Erhitzen des Gemischs auf eine Temperatur zwischen 60 und 100°C durch Einspritzen von Dampf ausgeführt wird.

4. Verfahren nach Anspruch 1, dadurch gekennzeichnet, daß das wäßrige alkalische Medium vor dem Einspinnen in das saure Medium eine Viskosität zwischen 10 und 30 Pa . s aufweist.

5. Verfahren nach Anspruch 1, dadurch gekennzeichnet, daß vor dem Einspinnen in das saure Medium das alkalische Medium durch Filterkerzen hindurchgeführt wird.

6. Verfahren nach Anspruch 1, dadurch gekennzeichnet, daß vor dem Einspinnen in das wäßrige saure Medium oder bei einer Rückführung das wäßrige alkalische Medium mit Aktivkohle behandelt wird.

7. Verfahren nach Anspruch 1, dadurch gekennzeichnet, daß nach der Koagulation die Fäden in der Weise gewaschen werden, daß ihr Salzgehalt auf 2 bis 5%, bezogen auf das Gewicht der Trockenfeststoffe, abgesenkt wird.

8. Verfahren nach Anspruch 1, dadurch gekennzeichnet, daß die Fäden 10 bis 15 min in Wasser von 50 bis 75°C eingetaucht werden.

9. Verfahren nach Anspruch 1, dadurch gekennzeichnet, daß nach der Koagulation die Fischproteinfäden auf einen pH zwischen 6 und 6,8 neutralisiert werden.

10. Fischproteinfäden, welche durch das Verfahren nach Anspruch 1 erhalten worden sind.

11. Fäden nach Anspruch 10, dadurch gekennzeichnet, daß ihr P.E.R.-Wert in der Nähe von 3,8 liegt.

## Claims

1. A process for spinning fish proteins in which an alkaline aqueous solution of the proteins is prepared and injected through a spinneret into an aqueous acid medium thereby the proteins coagulate into threads, characterized in that the alkaline medium which contains the fish proteins is prepared from whole fish or fish pieces by the following sequence of steps:

— grinding whole fish or fish pieces in the presence of water, the water to fish ratio being 0.7:1 to 2.5:1 by weight,
— adding alkali to the ground fish in an alkali to fish ratio of 0.5:1 to 1.5:1 by weight based on dry matter,
— heating the alkali/fish mixture to a temperature of 60 to 100°C for 0.5 to 3 minutes,
— cooling the mixture to a temperature of 35 to 60°C and passing the cooled mixture through a colloid mill,
— eliminating solid particles by centrifugation and subsequent desaerating and optionally concentrating to obtain a protein solution having a dry matter content of 6 to 10% by weight,

and further characterized in that the alkaline aqueous solution is injected through a spinneret into an aqueous acid medium having a pH of 0.7 to 0.9 and a salt concentration of 7 to 15% by weight whereby the pH and the salt concentration are maintained substantially constant during spinning, and that finally the fibres are washed and set by heating, and neutralized.

2. A process as claimed in claim 1, wherein the ratio by weight of water to fish is from 1.0:1 to 1.5:1.

3. A process as claimed in claim 1, wherein heating of the mixture to a temperature of from 60 to 100°C is carried out by the injection of steam.

4. A process as claimed in claim 1, wherein before injection into the acid medium the aqueous alkaline medium has a viscosity of from 10 to 30 Pa . s.

5. A process as claimed in claim 1, wherein before injection into the acid medium the alkaline medium is passed through filter candles.

6. A process as claimed in claim 1, wherein before injection into the aqueous acid medium or into a recycling stage the aqueous alkaline medium is treated with active carbon.

7. A process as claimed in claim 1, wherein after coagulation the threads are washed with water to reduce their salt content to from 2 to 5% by weight, based on dry matter.

8. A process as claimed in claim 1, wherein the threads are immersed for 10 to 15 minutes in water at 50 to 75°C.

9. A process as claimed in claim 1, wherein after coagulation the threads of fish protein are neutralised to a pH of from 6 to 6.8.

10. Threads of fish protein obtained by a process as claimed in claim 1.

11. Threads as claimed in claim 10, having a P.E.R. value of about 3.8.